# EUROPEAN PATENT APPLICATION

(11) **EP 1 381 176 A2**
(43) Date of publication of application: **14.01.2004**
(21) Application number: 03014067.7
(22) Date of filing: 23.06.2003
(51) Int. Cl.: H04B 10/18

(54) **System for measuring chromatic dispersion**

(30) Priority: 09.07.2002 JP 2002199353
(71) Applicant: KDDI Submarine Cable Systems Inc., Tokyo (JP); MITSUBISHI DENKI KABUSHIKI KAISHA, Tokyo (JP)
(72) Inventor: Taga, Hidenori, KDDI Submarine Cable Systems Inc., Shinjuku-ku, Tokyo (JP); Yamauchi, Hiroshi KDDI Submarine Cable Systems Inc, Shinjuku-ku, Tokyo (JP)
(74) Representative: Schaumburg, Thoenes & Thurn

(57) **Abstract**

To measure a chromatic dispersion value in an optical fiber in-service, an optical transmitter (10) multiplexes n signal lights carrying data Dl to Dn on optical carriers of frequency-modulated wavelengths different from each other and being phase-modulated to output into an optical fiber (12). A demultiplexer (30) demultiplexes the input light from the optical fiber (12) into the optical signals having the respective wavelengths. Photodetectors (32-1 to 32-n) convert the optical signals having the respective wavelengths into electric signals. Clock extractors (34-1 to 34-n) extract clock components of data D1 to Dn out of the outputs from the responding photodetectors (32-1 to 32-n). Data reproducers (36-1 to 36-n) reproduce the data Dl to Dn out of the respective outputs from the photodetectors (32-1 to 32-n). A phase-locked loop (PLL) composed of oscillators (38-1 to 38-n), multipliers (40-1 to 40-n), and loop filters (42-1 to 42-n) extracts FM modulation components out of the respective outputs from the clock extractors (34-1 to 34-n). FM component measuring apparatuses (44-1 to 44-n) measure amplitudes of FM modulation components and FM modulation frequencies, and calculators (46-1 to 46-n) calculate chromatic dispersion values at the respective wavelengths.

## Description

### FIELD OF THE INVENTION

This invention generally relates to a WDM optical transmission system, chromatic dispersion measuring method, optical transmitter, and optical receiver, and more specifically relates to a WDM optical transmission system, chromatic dispersion measuring method, optical transmitter, and optical receiver capable of measuring chromatic dispersion in-service.

### BACKGROUND OF THE INVENTION

In a long haul optical fiber transmission system, especially in a high-speed optical fiber transmission system over gigabit per second, chromatic dispersion in an optical fiber transmission line becomes an important parameter to seriously affect transmission characteristics.

Generally, the chromatic dispersion has been calculated from a propagation delay time of a signal light. However, in this method, it is necessary to provide another signal transmission system for transmitting a measured result from an output point to an input point of a measured signal light in an optical fiber transmission line and therefore a configuration of measuring system tends to be complicated and large-scale.

On the other hand, a chromatic dispersion measuring method that requires no signal transmission system between an input point and an output point in an optical fiber transmission line has been proposed (See Yuichi Takushima, Kazuro Kikuchi, "A NOVEL METHOD FOR OPTICAL FIBRE DISPERSION MEASUREMENT AND ITS APPLICATION TO IN-SERVICE MONITOR", Proc. 27^{th} Eur. Conf. on Opt. Comm. (ECOC' 01-Amsterdam), We. L. 1.5, pp. 276-277). The details of this paper are described in the specification for reference.

The method disclosed in the above-paper is explained below. On the transmission side, a laser oscillation wavelength λp of a laser light source is frequency-modulated with a frequency f_{L}, and an output laser light from the laser light source is intensity-modulated with another frequency B and enters into an optical fiber transmission line. On the reception side, the prove light propagated in the optical transmission line is optoelectrically converted, and an intensity-modulated wave is extracted from the electric output to measure an amplitude v (f_{L}) of the extracted intensity-modulated wave. The obtained amplitude v ( f_{L}) indicates a group velocity dispersion of the probe wavelength λp.

However, the method described in the above paper can merely measure chromatic dispersion of a specific wavelength. In addition, this paper does not teach a method to measure chromatic dispersion while signals are transmitting.

In WDM (wavelength division multiplexing) systems or DWDM (dense wavelength division multiplexing) systems, since a large amount of data is transmitted, it is preferable if chromatic dispersion can be measured in-service.

### SUMMARY OF THE INVENTION

An object of the invention, therefore, is to provide a WDM optical transmission system, chromatic dispersion measuring method, optical transmitter, and optical receiver capable of measuring chromatic dispersion in-service.

According to the invention, a WDM optical transmission system comprises an optical transmission line, an optical transmitter to output a WDM signal light having a plurality of wavelengths different from each other into the optical transmission line, and an optical receiver to receive the WDM signal light propagated in the optical transmission line. The optical transmitter comprises a plurality of laser light sources, each outputting a frequency-modulated laser light having a wavelength different from the others, a plurality of data modulators to data-modulate the respective output lights from the plurality of laser light sources with transmission data (D1-Dn), a plurality of phase modulators to phase-modulate the respective output lights from the plurality of data modulators, and a multiplexer to multiplex the output lights from the plurality of the phase modulators. The optical receiver comprises a demultiplexer to demultiplex the WDM signal light into signal lights having respective wavelengths, a plurality of photodetectors to convert the signal lights having respective wavelengths demultiplexed by the demultiplexer into electric signals, a plurality of clock extractors to extract clock components out of the respective outputs from the plurality of photodetectors, a plurality of data reproducers, each reproducing a transmission data out of the output from the corresponding photodetector in the plurality of photodetectors according to the output from the corresponding clock extractor in the plurality of clock extractors, a plurality of FM modulation component extractors to extract FM modulation components out of the respective outputs from the plurality of clock extractors, FM component measuring apparatus to measure amplitudes of the FM modulation components out of the respective outputs from the plurality of FM modulation component extractors, and chromatic dispersion calculator to calculate chromatic dispersion values of the plurality of wavelengths out of the output from the FM component measuring apparatus.

According to the invention, a chromatic dispersion measuring method comprises steps of outputting frequency-modulated laser lights from a plurality of laser light sources, each having a wavelength different from the others, data-modulating the laser lights with transmission data (D1-Dn) respectively, phase-modulating the data modulated laser lights, multiplexing the phase-modulated laser lights to output into an optical transmission line, demultiplexing the light propagated in the optical transmission line into the signal lights having respective wavelengths, converting the demultiplexed signal lights having the respective wavelengths into electric signals, extracting clock components from the respective electric signals, reproducing transmission data out of the respective electric signals according to the corresponding clock components, extracting FM modulation components due to frequency modulation of the respective wavelengths out of the corresponding clock components, r and calculating chromatic dispersion values out of amplitudes of the extracted FM modulation components.

According to the invention, an optical transmitter to output a WDM signal light having a plurality of wavelengths different from each other into an optical transmission line comprises a plurality of laser light sources, each outputting a laser light having a wavelength different from the others, a plurality of data modulators for data-modulating the respective output lights from the plurality of laser light sources with transmission data (D1 to Dn), a plurality of phase modulators for phase-modulating the respective output lights from the plurality of data modulators, and a multiplexer to multiplex the output lights from the plurality of phase modulators, characterized in that the plurality of laser lights are frequency-modulated.

According to the invention, an optical receiver to receive a WDM signal light having a plurality of signal lights carrying data D1 to Dn with optical carriers of frequency-modulated wavelengths (λ1 to λn) different from each other, comprises a demultiplexer for demultiplexing the WDM signal light from an optical transmission line into the optical signals having the respective wavelengths (λ1 to λn), a plurality of photodetectors for converting the demultiplexed signal lights having the respective wavelengths (λ1 to λn) into electric signals, a plurality of clock extractors to extract clock components out of respective outputs from the plurality of photodetectors, a plurality of data reproducers, each reproducing a transmission data out of the output from the corresponding photodetector in the plurality of photodetectors according to the output from the corresponding clock extractor in the plurality of clock extractors, a plurality of FM modulation component extractors for extracting FM modulation frequency components out of respective outputs from the plurality of clock extractors, an FM component measuring apparatus for measuring amplitudes of the FM modulation components out of the output from the plurality of FM modulation component extractors, and a chromatic dispersion calculator for calculating chromatic dispersion values of the plurality of wavelengths out of the respective outputs from the FM component measuring apparatus.

### BRIEF DESCRIPTION OF THE DRAWINGS

The above and other objects, features and advantages of the present invention will be apparent from the following detailed description of explanatory embodiments of the invention in conjunction with the accompanying drawings, in which:
Fig. 1 is a schematic block diagram of an explanatory embodiment according to the invention;
Fig. 2 shows assignment examples of FM modulation frequencies f1 to fn;
Fig. 3 is a schematic block diagram of a backup apparatus for receiving data and measuring chromatic dispersion; and
Fig. 4 is a schematic block diagram of a configuration in which a single FM component measuring apparatus and a single calculator are shared.

### DETAILED DESCRIPTION

Explanatory embodiments of the invention are explained below in detail with reference to the drawings.

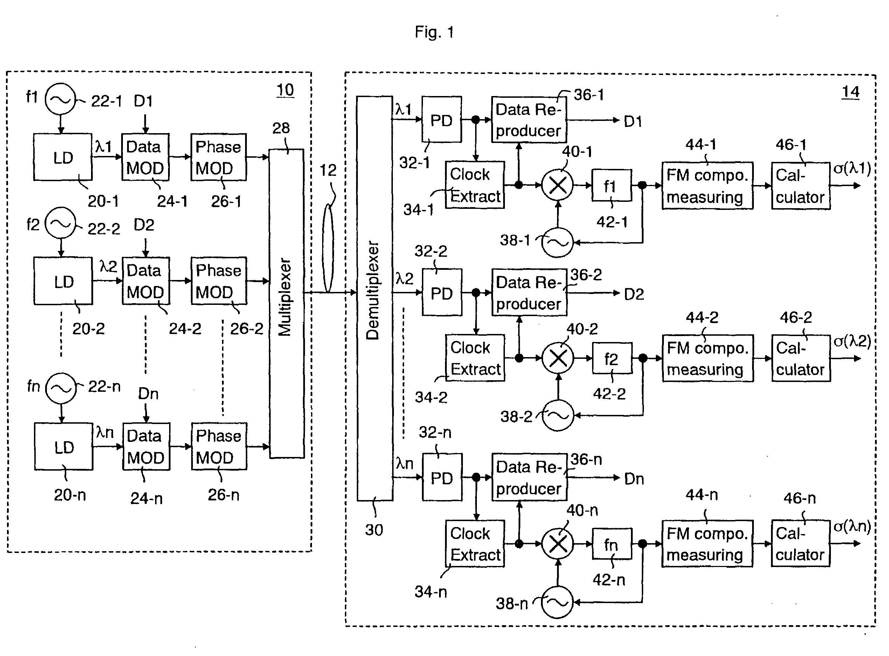

Fig. 1 shows a schematic block diagram of an explanatory embodiment according to the invention. An optical transmitter 10 connects to an optical receiver 14 via an optical fiber 12. In practice, on the optical fiber 12, dispersion compensating fibers to compensate accumulated chromatic dispersion and optical repeater amplifiers to repeat and amplify optical signals are disposed at appropriate intervals.

The optical transmitter 10 comprises laser light sources 20-1 to 20-n, each having a different wavelength of λ1 to λn. Oscillators 22-1 to 22-n oscillate at frequencies f1 to fn respectively, and oscillating wavelength of each laser light sources 20-1 to 20-n is frequency-modulated with a sine wave output from corresponding oscillator 22-1 to 22-n. For instance, the oscillating wavelength λ1 of the laser light source 20-1 is frequency-modulated with a sine wave signal of the frequency f1 output from the oscillator 22-1. Although some or all of the oscillating frequencies f1 to fn of the oscillators 22-1 to 22-n can be identical, preferably they should be different from each other.

Data modulators 24-1 to 24-n digital-modulate, e.g. binary-intensity-modulate, the output lights from the corresponding laser light sources 20-1 to 20-n with data D1 to Dn respectively. Phase modulators 26-1 to 26-n modulate optical phases of the output lights from the corresponding data modulators 24-1 to 24-n at a modulation degree to balance with a chromatic dispersion amount in the optical fiber 12. A multiplexer 28 multiplexes the output lights from the phase modulators 26-1 to 26-n and outputs the multiplexed light into an optical fiber 12. With the above operation, the WDM signal light having the signal lights of the wavelengths λ1 to λn carrying the data D1 to Dn is output into the optical fiber 12. What is different from conventional configurations is that the optical carriers of wavelengths λ1 to λn are frequency-modulated with the FM modulation frequencies f1 to fn respectively.

The configuration and operation of the optical receiver 14 is explained below. A demultiplexer 30 demultiplexes the WDM optical signal from the optical fiber 12 into the optical signals having the respective wavelengths λ1 to λn. The demultiplexed signals of wavelengths λ1 to λn enter photodetectors 32-1 to 32-n respectively. Each of the photodetectors 32-1 to 32-n converts the incident light into an electric signal. Clock extractors 34-1 to 34-n extract the clock component of the data D1 to Dn out of the outputs from the corresponding photodetectors 32-1 to 32-n respectively. Data reproducers 36-11 to 36-n reproduce the data D1 to Dn out of the outputs from the photodetectors 32-1 to 32-n according to the clocks extracted by the clock extractors 34-1 to 34-n respectively.

The output clocks from the clock extractors 34-1 to 34-n comprise FM modulation components due to the frequency modulation in the corresponding laser light sources 20-1 to 20-n. In this embodiment, chromatic dispersion is calculated from the FM modulation components according to the formula (2) described in the above paper.

Oscillators 38-1 to 38-n, multipliers 40-1 to 40-n, and loop filters 42-1 to 42-n form a phase-locked loop (PLL) circuit to extract the FM modulation components of frequencies f1 to fn being set at the loop filters 42-1 to 42-n out of the outputs from the clock extractors 34-1 to 34-n. Each of oscillators 38-1 to 38-n comprises a conventional voltage-controlled oscillator. FM component measuring apparatuses 44-1 to 44-n measure amplitudes v(f1) to v(fn) of the FM modulation components having frequencies f1 to fn and the FM modulation frequencies f1 to fn out of the outputs from the corresponding loop filters 42-1 to 42-n. Calculators 46-1 to 46-n calculate chromatic dispersions o(Xl) to σ(λn) at the wavelengths λ1 to λn by applying the formula (2) in the above paper to the outputs from the FM component measuring apparatuses 44-1 to 44-n.

For example, the clock output from the clock extractor 34-1 comprises a frequency modulation component due to the oscillating frequency f1 of the oscillator 22-1. The multiplier 40-1 multiplies the output clock from the clock extractor 34-1 by the output from the voltage-controlled oscillator 38-1. The multiplier 40-1 outputs a sine wave signal having a frequency corresponding to the difference between the frequency of the output clock from the clock extractor 34-1 and the frequency of the output from the voltage-controlled oscillator 38-1. The loop filter 42-1 extracts the component of the frequency f1 out of the output from the multiplier 40-1. The output from the loop filter 42-1 is applied to the voltage-controlled oscillator 38-1 as an error signal. The output frequency of the voltage-controlled oscillator 38-1 is controlled so that the output of the loop filter 42-1 becomes the maximum. Owing to this loop, the output of the loop filter 42 represents the FM modulation component of the frequency f1.

The FM component measuring apparatus 44-1 measures the amplitude v(f1) of the frequency f1 and the frequency f1 out of the output from the loop filter 42-1. The calculator 46-1 calculates the chromatic dispersion σ(λ1) at the wavelength λ1 by applying the amplitude v(f1) and frequency f1 measured by the FM component measuring apparatus 44-1 to the formula (2) in the above paper. Since f1 is known corresponding to the wavelength λ1, the FM component measuring apparatus 44-1 needs not to measure the frequency f1 of the FM modulation component in principle. However, there is a possibility that the transmission side may change the frequency f1. By setting the FM component measuring apparatus 44-1 to measure both amplitude v(f1) and frequency f1 of the FM modulation component, the receiver 14 can automatically correspond even if the transmitter 10 changed the frequency f1.

The functions of the voltage-controlled oscillators 38-2 to 38-n, multipliers 40-2 to 40-n, loop filters 42-2 to 42-n, FM component measuring apparatuses 44-2 to 44-n and calculators 46-2 to 46-n are identical to those of the above-described voltage-controlled oscillator 38-1, multiplier 40-1, loop filter 42-1, FM component measuring apparatus 44-12, and calculator 46-1 except for center frequencies of the loop filters 42-1 to 42-n are f2 to fn respectively.

As described above, while transmitting the data D1 to Dn, namely under the in-service condition, the calculators 46-1 to 46-n can output the chromatic dispersions σ(λ1) to σ(λn). That is, the chromatic dispersion values of the optical fiber 12 sampled through the signal wavelengths λ1 to λn are obtained.

The FM modulation frequencies f1 to fn can be any frequencies as far as they are sufficiently lower compared to the bit rates of the data D1 to Dn. For example, in gigabit-class data transmission, the FM modulation frequencies f1 to fn can be several ten Hz to several ten MHz. In the frequency region of this level, values such as several hundred to several thousand can be easily realized as the Q values of the loop filters 42-1 to 42-n. In this case, the frequency intervals of the FM modulation frequencies f1 to fn can be set to 1/10 to 1/100 of the maximum frequency. For example, when the maximum frequency is 10 kHz, the frequency can be assigned at 100 Hz to 1 kHz intervals.

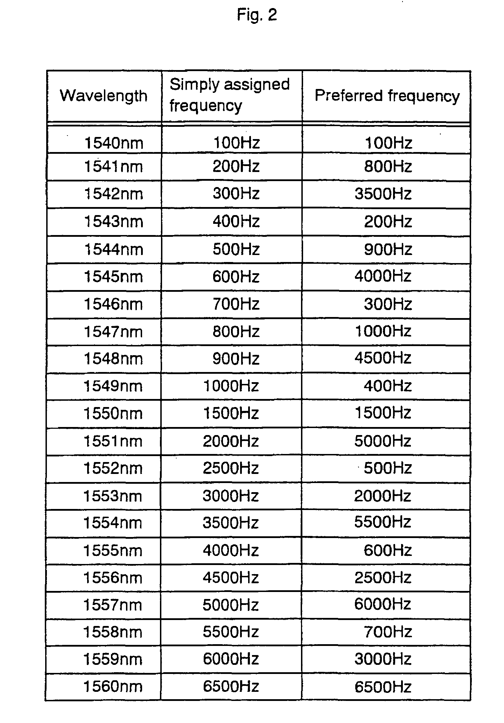

In the multiplexer 28 or the demultiplexer 30, the crosstalk between adjacent wavelengths can be problem. As the optical spectrum expands because of the phase modulation of the phase modulators 26-1 to 26-n, a part of the spectrum easily leaks to the adjacent wavelength spectra. Accordingly, when the f1 to fn are set to different frequencies, the FM modulation frequencies used in the adjacent wavelengths should have frequency differences as large as possible and close frequencies should be used for the distant wavelengths. Fig. 2 shows assigned examples of the wavelengths λ1 to λn to the FM modulation frequencies f1 to fn It shows examples in which different frequencies are assigned in order and examples in which the crosstalk between adjacent wavelengths has been considered.

In the above-described embodiment, to make it easily understandable, the calculators 46-1 to 46-n are disposed for each of the FM component measuring apparatuses 44-1 to 44-n. However, it is obvious that a single calculator calculates the chromatic dispersion values out of the outputs from the FM component measuring apparatuses 44-4 to 44-n at the same time or by time sharing. As the calculators 46-1 to 46-n, it is possible to obtain sufficiently high-speed microcomputer and therefore it is realistic to dispose a single microcomputer to realize the functions of the calculators 46-1 to 46-n.

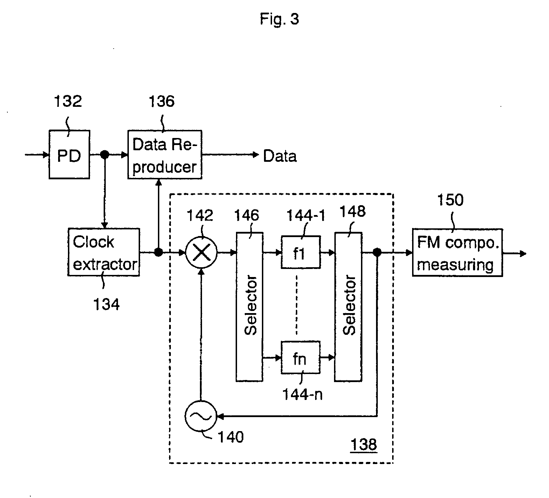

In the optical receiver 14, there is no wavelength dependency in the process after the demultiplexer 30 demultiplexes the WDM signal light into the signal lights having the respective wavelength. Accordingly, it is also realized the circuit part after the photodetectors 32-1 to 32-n until the FM component measuring apparatuses 44-1 to 44-n using a circuit board having the identical configuration. In this case, the only differences are center wavelengths of the loop filters 42-1 to 43-n in the PLL. As a backup board for a board fault, for example, as shown in Fig. 3, a processing circuit can be installed in which any of the loop filter wavelengths f1 to fn can be selected by a switch.

Fig. 3 shows a schematic clock diagram of a backup unit. In the backup unit shown in Fig. 3, it is planed to use a single microcomputer as the calculators 46-1 to 46-n.

A photodetector 132 converts an optical signal having any wavelength demultiplexed by the demultiplexer 30 into an electric signal. A clock extractor 134 extracts the clock component of the transmission data out of the output from the photodetector 132. A data reproducer 136 reproduces the transmission data out of the output from the photodetector 132 according to the clock extracted by the clock extractor 134.

A PLL circuit 138 comprises an oscillator 140, a multiplier 142, loop filters 144-1 to 144-n, each having a different frequency of f1 to fn, and selectors 146 and 148. Before the start of operation, loop filters to be practically used are selected from the loop filters 144-1 to 144-n by the selector 146 disposed on the input side of the loop filters 144-1 to 144-n and the selector 148 disposed on the output side of the loop filters 144-1 to 144-n. Except for the selecting function of the loop filters, the basic operation of the PLL circuit 138 is identical to that of the embodiment shown in Fig. 1. The PLL circuit 138 extracts the FM modulation frequency component corresponding to the transmission frequency of the loop filter selected from the loop filters 144-1 to 144-n by the selectors 146 and 148 out of the outputs from the clock extractor 134.

An FM component measuring apparatus 150 measures the amplitude v(fi) and the FM modulation frequency fi of the FM modulation component out of the output from the PLL circuit 138. Here, fi is the transmission frequency of the loop filter selected by the selectors 146 and 148.

The output from the FM component measuring apparatus 150 is applied to a calculator, which is not illustrated in the figure. The calculator applies the measured result to the formula (2) of the above-described paper to calculate the chromatic dispersion σ at the wavelength of the signal light input to the photodetector 132.

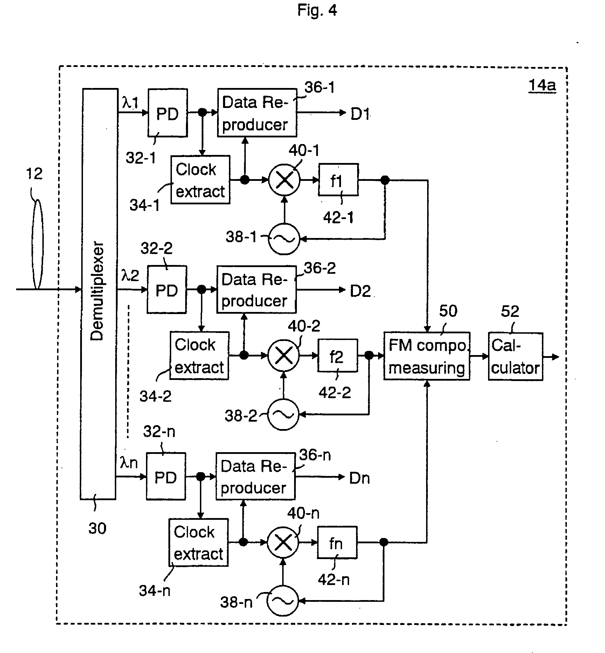

As an optical receiver 14a shown in Fig. 4, by changing to a configuration to share the FM component measuring apparatuses 44-1 to 44-n and the calculators 46-1 to 46-n, the production costs can be reduced. In Fig. 4, the elements identical to those in Fig. 1 are labeled with the same reference numbers. That is, each PLL output (namely the outputs from the loop filters 44-1 t 44-n) enters to a single FM component measuring apparatus 50 and a calculator 52 calculates a chromatic dispersion value of each wavelength out of the output from the FM component measuring apparatus 50. However, when PLL outputs from a plurality of shelves enter the same FM component measuring apparatus, wiring between the shelves are required to make the configuration complicated. Therefore, to make it practical, a configuration in which the PLL outputs of one shelf enter a FM component measuring apparatus disposed in the same shelf is preferable.

As readily understandable from the aforementioned explanation, according to the invention, a chromatic dispersion value of each signal wavelength in an optical transmission lien is measured in-service.

## Claims

1. A WDM optical transmission system comprising an optical transmission line (12), an optical transmitter (10) to output a WDM signal light composed of a plurality of signal lights, each having a wavelength different from the others, into the optical transmission line, and an optical receiver (14) to receive the WDM signal light propagated in the optical transmission line, **characterized in that**:
the optical transmitter has a plurality of laser light sources (20-1 to 20-n), each outputting a frequency-modulated laser light, a plurality of data modulators (24-1 to 24-n) for data-modulating the respective output lights from the plurality of laser light sources with transmission data (D1 to Dn), a plurality of phase modulators (26-1 to 26-n) for phase-modulating the respective output lights from the plurality of data modulators, and a multiplexer (28) for multiplexing the output lights from the plurality of phase modulators; and
the optical receiver has a demultiplexer (30) for demultiplexing the WDM signal light into the signal lights having each wavelength, a plurality of photodetectors (32-1 to 32-n) for converting the signal lights having each wavelength demultiplexed by the demultiplexer (30) into electric signals, a plurality of clock extractors (34-1 to 34-n) for extracting clock components from the respective outputs from the plurality of photodetectors, a plurality of data reproducers (36-1 to 36-n), each reproducing a transmission data out of the output of the corresponding photodetector in the plurality of photodetectors according to the output from the corresponding clock extractor in the plurality of the clock extractors, a plurality of FM modulation component extractors (38-1 to 38-n, 40-1 to 40-n, and 42-1 to 42-n) for extracting FM modulation components out of the respective outputs from the plurality of clock extractors (34-1 to 34-n), an FM component measuring apparatus (44-1 to 44-n, 50) for measuring amplitudes of the FM modulation components out of the respective outputs from the plurality of FM modulation component extractors, and a chromatic dispersion calculator (46-1 to 46-n, 52) for calculating chromatic dispersion values of the plurality of wavelengths out of the output from the FM component measuring apparatus (44-1 to 44-n, 50).

2. The WDM optical transmission system of claim wherein a frequency modulation frequency in each of the plurality of laser light sources is different from the others.

3. A chromatic dispersion measuring method comprising steps of:
outputting frequency-modulated laser lights from a plurality of laser light sources, each having a wavelength different from the others;
data-modulating the laser lights with transmission data (D1 to Dn) respectively;
phase-modulating the data-modulated laser lights;
multiplexing the phase-modulated laser lights and outputting into an optical transmission line;
demultiplexing the lights propagated in the optical transmission line into the signal lights having the respective wavelengths;
converting the demultiplexed signal lights having the respective wavelengths into electric signals;
extracting clock components out of the respective electric signals;
reproducing transmission data out of the respective electric signals according to the corresponding clock components;
extracting FM modulation components due to frequency modulation of the respective wavelengths out of the corresponding clock components; and
calculating chromatic dispersion values from amplitudes out of the extracted FM modulation components.

4. The method of claim 3 wherein a frequency modulation frequency in each of the plurality of laser light sources is different from the others.

5. An optical transmitter (10) to output a WDM signal light composed of a plurality of signal sights, each having a wavelength different from the others comprising:
a plurality of laser light sources (20-1 to 20-n), each outputting laser light having a different wavelength from the others;
a plurality of data modulators (24-1 to 24-n) for data-modulating the respective output lights from the plurality of laser light sources with transmission data (D1 to Dn);
a plurality of phase modulators (26-1 to 26-n) for phase-modulating the respective output lights from the plurality of data modulators; and
a multiplexer (28) for multiplexing the output lights from the plurality of phase modulators,
**characterized in that** the plurality of laser light sources are frequency-modulated.

6. The optical transmitter of claim 5 wherein a frequency modulation frequency in each of the plurality of laser light sources is different from the others.

7. An optical receiver to receive a WDM signal light composed of a plurality of signal lights carrying data D1 to Dn with optical carriers of frequency-modulated wavelengths different from each other comprising:
a demultiplexer (30) for demultiplexing the WDM signal light from an optical transmission line into respective wavelengths (λ1 to λn);
a plurality of photodetectors (32-1 to 32-n) for converting the signal lights having the respective wavelengths (λ1 to λn) demultiplexed by the demultiplexer (30) into electric signals;
a plurality of clock extractors (34-1 to 34-n) for extracting clock components from the respective outputs from the plurality of photodetectors;
a plurality of data reproducers (36-1 to 36-n), each reproducing a transmission data out of the output of the corresponding photodetector in the plurality of photodetectors according to the output from the corresponding clock extractor in the plurality of clock extractors;
a plurality of FM modulation component extractors (38-1 to 38-n, 40-1 to 40-n, 42-1 to 42-n) for extracting FM modulation components out of the respective outputs from the plurality of clock extractors (34-1 to 34-n);
an FM component measuring apparatus (44-1 to 44-n, 50) for measuring amplitudes of FM modulation components out of the respective outputs from the plurality of FM modulation component extractors; and
a chromatic dispersion calculator (46-1 to 46-n, 52) for calculating chromatic dispersion values at the plurality of wavelengths out of the output from the FM component measuring apparatus (44-1 to 44-n, 50).

8. The optical receiver of claim 7 wherein an extracting frequency of each of the plurality of FM modulation component extractors (38-1 to 38-n, 40-1 to 40-n, 42-1 to 42-n) is different from the others.
